# EUROPEAN PATENT APPLICATION

(11) **EP 4 756 684 A1**
(43) Date of publication of application: **10.06.2026**
(21) Application number: 25188626.3
(22) Date of filing: 09.07.2025
(51) Int. Cl.: G06N 10/80

(54) **FACILITATING COMMUNICATIONS BETWEEN DISPARATE QUANTUM COMPUTING SYSTEMS**

(30) Priority: 03.12.2024 US 202418966400
(71) Applicant: Red Hat, LLC, Raleigh, NC 27601 (US)
(72) Inventor: GRIFFIN, Leigh, Raleigh, 27601 (US); COADY, Stephen, Raleigh, 27601 (US)
(74) Representative: Murgitroyd & Company

(57) **Abstract**

A service executing on a first quantum computing system (QCS) receives an indication that a process executing on the first QCS desires to communicate with a second QCS. The service accesses QCS type information that identifies the second QCS as a first QCS type of a plurality of different QCS types. The service initiates a first external QCS agent on the first QCS that is operable to communicate with the second QCS based on a first QCS configuration of a plurality of QCS configurations, the first QCS configuration corresponding to the first QCS type.

## Description

### BACKGROUND

Quantum computing systems lack the standardization that has evolved over the past fifty years that simplifies communications between classical computing systems irrespective of the manufacturers of the classical computing systems.

### SUMMARY

The examples disclosed herein facilitate communications between disparate quantum computing systems.

In a first aspect of the present disclosure there is provided a method, the method comprising receiving, by a service executing on a first quantum computing system (QCS), an indication that a first process executing on the first QCS desires to communicate with a second QCS. The method further comprising accessing, by the service, QCS type information that identifies the second QCS as a first QCS type of a plurality of different QCS types. The method further comprising initiating, by the service, a first external QCS agent on the first QCS that is operable to communicate with the second QCS based on a first QCS configuration of a plurality of QCS configurations, the first QCS configuration corresponding to the first QCS type.

The method may further comprise receiving, by the first external QCS agent, a first message originating from the first process, translating, by the first external QCS agent based on the first QCS configuration, the first message from a standard QCS syntax to a second QCS syntax that is different from the standard QCS syntax to generate a first translated message, and sending, by the first external QCS agent, the first translated message to the second QCS.

The method may further comprise receiving, by the first external QCS agent from the second QCS, a reply message made in response to the first translated message, translating, by the first external QCS agent, the reply message from the second QCS syntax to generate a translated reply message in the standard QCS syntax; and sending, by the first external QCS agent to the first process, the translated reply message.

The first message may comprise a quantum process initiation message that instructs the second QCS to initiate a quantum process and wherein the reply message indicates that the quantum process has successfully been initiated.

The method may further comprise receiving, by the service, an indication that the first process desires to communicate with a third QCS, accessing, by the service, QCS type information that identifies the third QCS as a second QCS type of the plurality of different QCS types, and initiating, by the service, a second external QCS agent on the first QCS that is operable to communicate with the third QCS based on a second QCS configuration of the plurality of QCS configurations, the second QCS configuration corresponding to the second QCS type.

The method may further comprise receiving, by the first external QCS agent, a first message originating from the first process, translating, by the first external QCS agent based on the first QCS configuration, the first message from a standard QCS syntax to a second QCS syntax that is different from the standard QCS syntax to generate a first translated message, sending, by the first external QCS agent, the first translated message to the second QCS, receiving, by the second external QCS agent, a second message originating from the first process, translating, by the second external QCS agent based on the second QCS configuration, the second message from the standard QCS syntax to a third QCS syntax that is different from the standard QCS syntax to generate a second translated message, the second QCS configuration identifying the third QCS syntax, and sending, by the second external QCS agent, the second translated message to the third QCS.

The method may further comprise sending, by the first process to the first external QCS agent, a message comprising a query requesting a quantity of available qubits on the second QCS, and receiving, by the first process from the first external QCS agent, a first translated reply message identifying the quantity of available qubits on the second QCS.

The method may further comprise, in response to receiving the first translated reply message, sending, by the first process to the first external QCS agent, a quantum process initiation message that instructs the second QCS to initiate a quantum process, and receiving, by the first process from the first external QCS agent, a second translated reply message that indicates that the quantum process has successfully been initiated on the second QCS.

The method may further comprise receiving, by the first external QCS agent, the quantum process initiation message, translating, by the first external QCS agent based on the first QCS configuration, the quantum process initiation message from a standard QCS syntax to a second QCS syntax that is different from the standard QCS syntax to generate a translated quantum process initiation message, sending, by the first external QCS agent, the translated quantum process initiation message to the second QCS, receiving, by the first external QCS agent from the second QCS, a reply message made in response to the translated quantum process initiation message, the reply message indicating that the quantum process has successfully been initiated, translating, by the first external QCS agent, the reply message from the second QCS syntax to generate the second translated reply message in the standard QCS syntax, and sending, by the first external QCS agent to the first process, the second translated reply message.

The method may further comprise receiving, by the service, an indication that a second process executing on the first QCS desires to communicate with a third QCS, accessing, by the service, QCS type information that identifies the third QCS as a second QCS type of the plurality of different QCS types, and initiating, by the service, a second external QCS agent on the first QCS that is operable to communicate with the third QCS based on a second QCS configuration of the plurality of QCS configurations, the second QCS configuration corresponding to the second QCS type.

The method may further comprise receiving, by the second external QCS agent, a first message originating from the second process, translating, by the second external QCS agent based on the second QCS configuration, the first message from a standard QCS syntax to a second QCS syntax that is different from the standard QCS syntax to generate a first translated message, and sending, by the second external QCS agent, the first translated message to the third QCS.

The first QCS may be communicatively coupled to the second QCS via a fiber optic cable, and the method may further comprise receiving, by the first external QCS agent, a first message originating from the first process comprising an instruction to establish a communication session with the second QCS via the fiber optic cable, translating, by the first external QCS agent based on the first QCS configuration, the first message from a standard QCS syntax to a second QCS syntax that is different from the standard QCS syntax to generate a first translated message, and sending, by the first external QCS agent via the fiber optic cable, the first translated message to the second QCS.

The method may further comprise receiving, by the first QCS from the second QCS, a connection message, the connection message comprising a unique identifier of the second QCS and a QCS type of the second QCS, and responsive to determining, by the first QCS, that the second QCS was previously unknown to the first QCS, storing, in a data structure, an entry comprising the unique identifier and the QCS type of the second QCS.

The method may further comprise determining, by the first QCS, that the first QCS lacks a QCS configuration entry that corresponds to the QCS type of the second QCS, and sending, by the first QCS to the second QCS, a message indicating that the first QCS lacks a QCS configuration entry that corresponds to the QCS type of the second QCS.

The method may further comprise receiving, by the first QCS from the second QCS, information operable to facilitate a translation of messages written in a standard QCS syntax to corresponding translated messages written in a second QCS syntax that corresponds to the QCS type of the second QCS.

In a second aspect of the present disclosure there is provided a quantum computing system. The quantum computing system includes a memory, and a processor device coupled to the memory and is configured to receive an indication that a first process executing on the quantum computing system (QCS) desires to communicate with a second QCS. The processor device is further configured to access QCS type information that identifies the second QCS as a first QCS type of a plurality of different QCS types. The processor device is further configured to initiate a first external QCS agent on the first QCS that is operable to communicate with the second QCS based on a first QCS configuration of a plurality of QCS configurations, the first QCS configuration corresponding to the first QCS type.

The processor device may further be configured to receive, by the first external QCS agent, a first message originating from the first process, translate, by the first external QCS agent based on the first QCS configuration, the first message from a standard QCS syntax to a second QCS syntax that is different from the standard QCS syntax to generate a first translated message, and send, by the first external QCS agent, the first translated message to the second QCS.

The processor device may further be configured to receive, by the first external QCS agent from the second QCS, a reply message made in response to the first translated message, translate, by the first external QCS agent, the reply message from the second QCS syntax to generate a translated reply message in the standard QCS syntax, and send, by the first external QCS agent to the first process, the translated reply message.

The first message may comprise a quantum process initiation message that instructs the second QCS to initiate a quantum process and wherein the reply message indicates that the quantum process has successfully been initiated.

The processor device may further be configured to receive, by the service, an indication that the first process desires to communicate with a third QCS, access, by the service, QCS type information that identifies the third QCS as a second QCS type of the plurality of different QCS types, and initiate, by the service, a second external QCS agent on the first QCS that is operable to communicate with the third QCS based on a second QCS configuration of the plurality of QCS configurations, the second QCS configuration corresponding to the second QCS type.

The processor device may further be configured to receive, by the first external QCS agent, a first message originating from the first process, translate, by the first external QCS agent based on the first QCS configuration, the first message from a standard QCS syntax to a second QCS syntax that is different from the standard QCS syntax to generate a first translated message, send, by the first external QCS agent, the first translated message to the second QCS, receive, by the second external QCS agent, a second message originating from the first process, translate, by the second external QCS agent based on the second QCS configuration, the second message from the standard QCS syntax to a third QCS syntax that is different from the standard QCS syntax to generate a second translated message, the second QCS configuration identifying the third QCS syntax, and send, by the second external QCS agent, the second translated message to the third QCS.

The processor device may further be configured to send, by the first process to the first external QCS agent, a message comprising a query requesting a quantity of available qubits on the second QCS, and receive, by the first process from the first external QCS agent, a first translated reply message identifying the quantity of available qubits on the second QCS.

The processor device may further be configured to, in response to receiving the first translated reply message, send, by the first process to the first external QCS agent, a quantum process initiation message that instructs the second QCS to initiate a quantum process, and receive, by the first process from the first external QCS agent, a second translated reply message that indicates that the quantum process has successfully been initiated on the second QCS.

The processor device may further be configured to receive, by the first external QCS agent, the quantum process initiation message, translate, by the first external QCS agent based on the first QCS configuration, the quantum process initiation message from a standard QCS syntax to a second QCS syntax that is different from the standard QCS syntax to generate a translated quantum process initiation message, send, by the first external QCS agent, the translated quantum process initiation message to the second QCS, receive, by the first external QCS agent from the second QCS, a reply message made in response to the translated quantum process initiation message, the reply message indicating that the quantum process has successfully been initiated, translate, by the first external QCS agent, the reply message from the second QCS syntax to generate the second translated reply message in the standard QCS syntax, and send, by the first external QCS agent to the first process, the second translated reply message.

The processor device may further be configured to receive, by the service, an indication that a second process executing on the first QCS desires to communicate with a third QCS, access, by the service, QCS type information that identifies the third QCS as a second QCS type of the plurality of different QCS types, and initiate, by the service, a second external QCS agent on the first QCS that is operable to communicate with the third QCS based on a second QCS configuration of the plurality of QCS configurations, the second QCS configuration corresponding to the second QCS type.

The processor device may further be configured to receive, by the second external QCS agent, a first message originating from the second process, translate, by the second external QCS agent based on the second QCS configuration, the first message from a standard QCS syntax to a second QCS syntax that is different from the standard QCS syntax to generate a first translated message, and send, by the second external QCS agent, the first translated message to the third QCS.

The first QCS may be communicatively coupled to the second QCS via a fiber optic cable, and the processor device may further be configured to receive, by the first external QCS agent, a first message originating from the first process comprising an instruction to establish a communication session with the second QCS via the fiber optic cable, translate, by the first external QCS agent based on the first QCS configuration, the first message from a standard QCS syntax to a second QCS syntax that is different from the standard QCS syntax to generate a first translated message, and send, by the first external QCS agent via the fiber optic cable, the first translated message to the second QCS.

The processor device may further be configured to receive, by the first QCS from the second QCS, a connection message, the connection message comprising a unique identifier of the second QCS and a QCS type of the second QCS, and responsive to determining, by the first QCS, that the second QCS was previously unknown to the first QCS, store, in a data structure, an entry comprising the unique identifier and the QCS type of the second QCS.

The processor device may further be configured to determine, by the first QCS, that the first QCS lacks a QCS configuration entry that corresponds to the QCS type of the second QCS, and send, by the first QCS to the second QCS, a message indicating that the first QCS lacks a QCS configuration entry that corresponds to the QCS type of the second QCS.

The processor device may further be configured to receive, by the first QCS from the second QCS, information operable to facilitate a translation of messages written in a standard QCS syntax to corresponding translated messages written in a second QCS syntax that corresponds to the QCS type of the second QCS.

In a third aspect of the present disclosure there is provided a non-transitory computer-readable storage medium. The non-transitory computer-readable storage medium includes executable instructions configured to cause a processor device to receive an indication that a first process executing on the quantum computing system (QCS) desires to communicate with a second QCS. The instructions further cause the processor device to access QCS type information that identifies the second QCS as a first QCS type of a plurality of different QCS types. instructions to cause a processor device to initiate a first external QCS agent on the first QCS that is operable to communicate with the second QCS based on a first QCS configuration of a plurality of QCS configurations, the first QCS configuration corresponding to the first QCS type.

The processor device may further be caused to receive, by the first external QCS agent, a first message originating from the first process, translate, by the first external QCS agent based on the first QCS configuration, the first message from a standard QCS syntax to a second QCS syntax that is different from the standard QCS syntax to generate a first translated message, and send, by the first external QCS agent, the first translated message to the second QCS.

The processor device may further be caused to receive, by the first external QCS agent from the second QCS, a reply message made in response to the first translated message, translate, by the first external QCS agent, the reply message from the second QCS syntax to generate a translated reply message in the standard QCS syntax, and send, by the first external QCS agent to the first process, the translated reply message.

The first message may comprise a quantum process initiation message that instructs the second QCS to initiate a quantum process and wherein the reply message indicates that the quantum process has successfully been initiated.

The processor device may further be caused to receive, by the service, an indication that the first process desires to communicate with a third QCS, access, by the service, QCS type information that identifies the third QCS as a second QCS type of the plurality of different QCS types, and initiate, by the service, a second external QCS agent on the first QCS that is operable to communicate with the third QCS based on a second QCS configuration of the plurality of QCS configurations, the second QCS configuration corresponding to the second QCS type.

The processor device may further be caused to receive, by the first external QCS agent, a first message originating from the first process, translate, by the first external QCS agent based on the first QCS configuration, the first message from a standard QCS syntax to a second QCS syntax that is different from the standard QCS syntax to generate a first translated message, send, by the first external QCS agent, the first translated message to the second QCS, receive, by the second external QCS agent, a second message originating from the first process, translate, by the second external QCS agent based on the second QCS configuration, the second message from the standard QCS syntax to a third QCS syntax that is different from the standard QCS syntax to generate a second translated message, the second QCS configuration identifying the third QCS syntax, and send, by the second external QCS agent, the second translated message to the third QCS.

The processor device may further be caused to send, by the first process to the first external QCS agent, a message comprising a query requesting a quantity of available qubits on the second QCS, and receive, by the first process from the first external QCS agent, a first translated reply message identifying the quantity of available qubits on the second QCS.

The processor device may further be caused to, in response to receiving the first translated reply message, send, by the first process to the first external QCS agent, a quantum process initiation message that instructs the second QCS to initiate a quantum process, and receive, by the first process from the first external QCS agent, a second translated reply message that indicates that the quantum process has successfully been initiated on the second QCS.

The processor device may further be caused to receive, by the first external QCS agent, the quantum process initiation message, translate, by the first external QCS agent based on the first QCS configuration, the quantum process initiation message from a standard QCS syntax to a second QCS syntax that is different from the standard QCS syntax to generate a translated quantum process initiation message, send, by the first external QCS agent, the translated quantum process initiation message to the second QCS, receive, by the first external QCS agent from the second QCS, a reply message made in response to the translated quantum process initiation message, the reply message indicating that the quantum process has successfully been initiated, translate, by the first external QCS agent, the reply message from the second QCS syntax to generate the second translated reply message in the standard QCS syntax, and send, by the first external QCS agent to the first process, the second translated reply message.

The processor device may further be caused to receive, by the service, an indication that a second process executing on the first QCS desires to communicate with a third QCS, access, by the service, QCS type information that identifies the third QCS as a second QCS type of the plurality of different QCS types, and initiate, by the service, a second external QCS agent on the first QCS that is operable to communicate with the third QCS based on a second QCS configuration of the plurality of QCS configurations, the second QCS configuration corresponding to the second QCS type.

The processor device may further be caused to receive, by the second external QCS agent, a first message originating from the second process, translate, by the second external QCS agent based on the second QCS configuration, the first message from a standard QCS syntax to a second QCS syntax that is different from the standard QCS syntax to generate a first translated message, and send, by the second external QCS agent, the first translated message to the third QCS.

The first QCS may be communicatively coupled to the second QCS via a fiber optic cable, and the processor device may further be caused to receive, by the first external QCS agent, a first message originating from the first process comprising an instruction to establish a communication session with the second QCS via the fiber optic cable, translate, by the first external QCS agent based on the first QCS configuration, the first message from a standard QCS syntax to a second QCS syntax that is different from the standard QCS syntax to generate a first translated message, and send, by the first external QCS agent via the fiber optic cable, the first translated message to the second QCS.

The processor device may further be caused to receive, by the first QCS from the second QCS, a connection message, the connection message comprising a unique identifier of the second QCS and a QCS type of the second QCS, and responsive to determining, by the first QCS, that the second QCS was previously unknown to the first QCS, store, in a data structure, an entry comprising the unique identifier and the QCS type of the second QCS.

The processor device may further be caused to determine, by the first QCS, that the first QCS lacks a QCS configuration entry that corresponds to the QCS type of the second QCS, and send, by the first QCS to the second QCS, a message indicating that the first QCS lacks a QCS configuration entry that corresponds to the QCS type of the second QCS.

The processor device may further be caused to receive, by the first QCS from the second QCS, information operable to facilitate a translation of messages written in a standard QCS syntax to corresponding translated messages written in a second QCS syntax that corresponds to the QCS type of the second QCS.

Individuals will appreciate the scope of the disclosure and realize additional aspects thereof after reading the following detailed description of the examples in association with the accompanying drawing figures.

### BRIEF DESCRIPTION OF THE DRAWINGS

The accompanying drawing figures incorporated in and forming a part of this specification illustrate several aspects of the disclosure and, together with the description, serve to explain the principles of the disclosure.
Figure 1 is a block diagram of an environment in which facilitating communications between disparate quantum computing systems can be practiced according to some implementations;
Figure 2 is a flowchart of a method for facilitating communications between disparate quantum computing systems according to some implementations;
Figure 3 is a block diagram of the environment illustrated in Figure 1 at a subsequent point in time according to some implementations;
Figure 4 is a block diagram of an environment in which facilitating communications between disparate quantum computing systems can be practiced according to some implementations;
Figure 5 is a simplified block diagram of the environment illustrated in Figure 1 according to some implementations; and
Figure 6 is a block diagram of a quantum computing system suitable for implementing examples according to one example.

### DETAILED DESCRIPTION

The examples set forth below represent the information to enable individuals to practice the examples and illustrate the best mode of practicing the examples. Upon reading the following description in light of the accompanying drawing figures, individuals will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the examples and claims are not limited to any particular sequence or order of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

Quantum computing systems (QCSs) lack the standardization that has evolved over the past fifty years that simplifies communications between classical computing systems irrespective of the manufacturers of the classical computing systems.

As QCSs have become more prevalent and available there is a need for services/processes on one quantum computing system to communicate with other QCSs. Such communications may be for any number of purposes, such as setting up a quantum channel between the QCSs, obtaining information about a QCS such as a number of available qubits, types of qubits implemented by the QCS, processor and memory utilization of the QCS, causing events to occur on a QCS such as the initiation or scheduling of a quantum process, and the like. Currently due to the proprietary nature of QCSs a process on one QCS that desires to communicate with another QCS is specifically engineered to accomplish the desired communications. This is time consuming and fraught with the potential for errors. Moreover, the process must be specially engineered differently for each different type of QCS with which the process desires to communicate, requiring software developers to expend a substantial amount of time learning the appropriate commands and coding the process to properly utilize the commands.

The examples disclosed herein facilitate communications between disparate QCSs. A service executing on a first QCS, receives an indication that a process executing on the first QCS desires to communicate with a second QCS. The service accesses QCS type information that identifies the second QCS as a first QCS type of a plurality of different QCS types. The service initiates a first external QCS agent on the first QCS that is operable to communicate with the second QCS based on a first QCS configuration of a plurality of QCS configurations, the first QCS configuration corresponding to the first QCS type.

Among other advantages the examples disclosed herein greatly reduce the complexity and reliability of inter-QCS communications by establishing a standard syntax/interface irrespective of the QCS type.

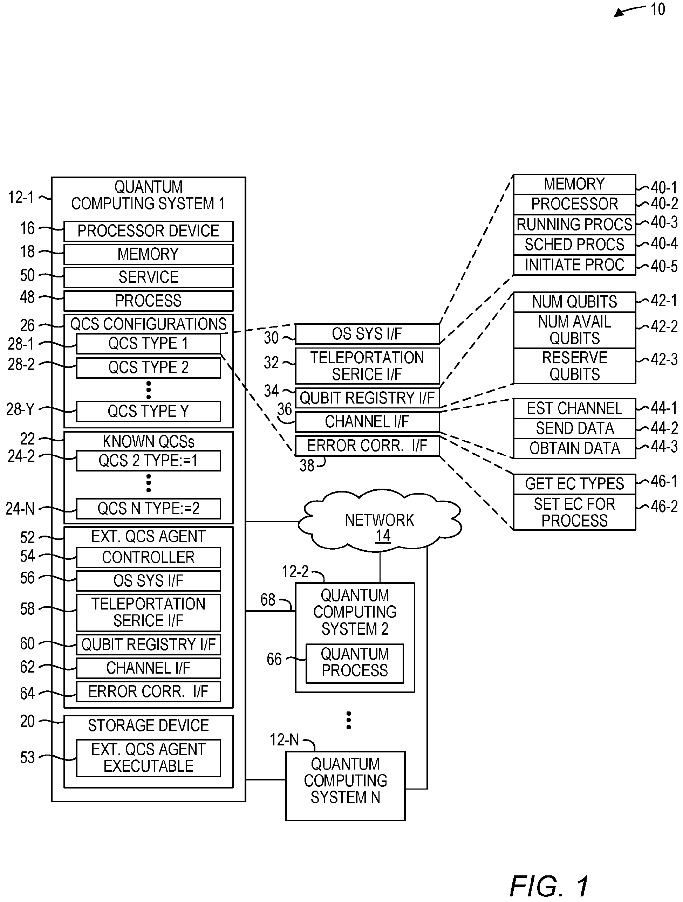

Figure 1 is a block diagram of an environment 10 in which facilitating communications between disparate QCSs can be practiced according to some implementations. The environment 10 include QCSs 12-1 - 12-N (generally, QCSs 12). The QCSs 12 operate in quantum environments but can operate using classical computing principles or quantum computing principles. When using quantum computing principles, the QCSs 12 perform computations that utilize quantum-mechanical phenomena, such as superposition and entanglement. The QCSs 12 may operate under certain environmental conditions, such as at or near 0° Kelvin. When using classical computing principles, the QCSs 12 utilizes binary digits that have a value of either 1 or 0.

The QCSs 12 may communicate with one via one or more classical networks 14 which may comprise, for example, local area networks, cellular networks, the Internet, or any combination thereof. Some or all of the QCSs 12 may be in close physical proximity or may be separated by thousands of miles.

The QCS 12-1 includes a processor device 16, a memory 18 and a storage device 20. The QCS 12-1 includes a known QCSs data structure 22 that comprises a plurality of entries 24-2 - 24-N (generally, entries 24), each of which corresponds to a QCS 12-2 - 12-N. The entries 24 include QCS type information that identifies the corresponding QCS 12 as a particular QCS type of a plurality of different QCS types. For example, the entry 24-2 indicates that the QCS 12-2 is a QCS type 1. The entry 24-N indicates that the QCS 12-N is a QCS type 2. The QCS 12-1 also includes a QCS configurations data structure 26 that contains a plurality of QCS configurations 28-1 - 28-Y. The QCS configurations 28 correspond to QCS types identified in the known QCSs data structure 22. For example, the QCS configuration 28-1 corresponds to a QCS type 1 and the QCS configuration 28-2 corresponds to a QCS type 2. QCSs are designated as different types based on whether different syntaxes are necessary to implement a desired function. QCSs of the same manufacturer but different operating system versions that require different commands/instructions to implement a desired function comprise different QCS types. QCSs of different manufacturers that require different commands/instructions to implement a desired function comprise different QCS types. For example, if a first QCS requires the command "initiate Quantum Program Y" to cause the initiation of Quantum Program Y and a second QCS requires the command "Quantum Program Y: initiate" to cause the initiation of Quantum Program Y, the first and second QCSs are different QCS types.

Each QCS configuration 28 includes a configuration for the corresponding QCS type to which the QCS configuration 28 corresponds. The configuration comprises information that enable a QCS agent, as will be described in greater detail below, to translate a message written in a standard QCS syntax to a message in a QCS syntax that is suitable for that particular type of QCS. For example, a message to obtain the current processor utilization of a QCS of a certain type can be translated from the standard QCS syntax to a translated message in the particular syntax required by that type of QCS to request the current processor utilization.

The QCS configuration 28-1 includes an operating system (OS) interface (IF) 30, a teleportation service interface 32, a qubit registry interface 34, a quantum channel interface 36 and an error correction interface 38. The operating system OS interface 30 includes a memory element 40-1 that facilitates the translation of a message that includes a request for a current memory utilization of a QCS 12 of QCS type 1 from the standard QCS syntax to a translated message having the QCS type 1 syntax to obtain the current memory utilization of a QCS 12 of QCS type 1. The operating system OS interface 30 includes a processor element 40-2 that facilitates the translation of a message that includes a request for a current processor utilization of a QCS 12 of QCS type 1 from the standard QCS syntax to a translated message having the QCS type 1 syntax to obtain the current processor utilization of a QCS 12 of QCS type 1. The operating system OS interface 30 includes a running processes element 40-3 that facilitates the translation of a message that includes a request for a current quantity of running processes of a QCS 12 of QCS type 1 from the standard QCS syntax to a translated message having the QCS type 1 syntax to obtain the current quantity of running processes of a QCS 12 of QCS type 1. The operating system OS interface 30 includes a processor element 40-4 that facilitates the translation of a message that includes a request for a current quantity of scheduled processes of a QCS 12 of QCS type 1 from the standard QCS syntax to a translated message having the QCS type 1 syntax to obtain the current quantity of scheduled processes of a QCS 12 of QCS type 1. The operating system OS interface 30 includes a processor element 40-5 that facilitates the translation of a message that includes an instruction to initiate a quantum process of a QCS 12 of QCS type 1 from the standard QCS syntax to a translated message having the QCS type 1 syntax to instruct a QCS 12 of QCS type 1 initiate a quantum process.

The teleportation service interface 32 facilitates the translation of messages related to the control and management of a teleportation service from the standard QCS syntax to translated messages having the QCS type 1 syntax for controlling and managing a teleportation service of a QCS 12 of QCS type 1.

The qubit registry interface 34 includes a number of qubits element 42-1 that facilitates the translation of a message that includes a request for the total number of qubits implemented by a QCS 12 of QCS type 1 from the standard QCS syntax to a translated message having the QCS type 1 syntax to obtain the total number of qubits implemented by a QCS 12 of QCS type 1. The qubit registry interface 34 includes a number of available qubits element 42-2 that facilitates the translation of a message that includes a request for the total number of available qubits (i.e., those qubits of the total number of qubits that are currently unassigned to a quantum process) implemented by a QCS 12 of QCS type 1 from the standard QCS syntax to a translated message having the QCS type 1 syntax to obtain the total number of available qubits implemented by a QCS 12 of QCS type 1. The qubit registry interface 34 includes a reserve qubits element 42-3 that facilitates the translation of a message that includes a request to reserve a quantity of qubits of a QCS 12 of QCS type 1 from the standard QCS syntax to a translated message having the QCS type 1 syntax to reserve a quantity of qubits of a QCS 12 of QCS type 1.

The quantum channel interface 36 includes an establish channel element 44-1 that facilitates the translation of a message to establish a quantum channel between the QCS 12-1 and a QCS 12 of QCS type 1 with which the QCS 12-1 has a suitable physical interface, such as a fiber cable, from the standard QCS syntax to a translated message having the QCS type 1 syntax to establish a quantum channel of a QCS 12 of QCS type 1. The quantum channel interface 36 includes a send data element 44-2 that facilitates the translation of a message to send quantum data via the quantum channel from the standard QCS syntax to a translated message having the QCS type 1 syntax to send the quantum data via the quantum channel established with a QCS 12 of QCS type 1. The quantum channel interface 36 includes an obtain data element 44-3 that facilitates the translation of a message to obtain quantum data via the quantum channel from the standard QCS syntax to a translated message having the QCS type 1 syntax to obtain the quantum data via the quantum channel established with a QCS 12 of QCS type 1.

The error correction interface 38 includes a get error correction options element 46-1 that facilitates the translation of a message that requests available error correction options of a QCS from the standard QCS syntax to a translated message having the QCS type 1 syntax to request available error correction options of a QCS 12 of QCS type 1. The error correction interface 38 includes a set error correction element 46-2 that facilitates the translation of a message that sets error correction for a quantum process that is to be initiated on a QCS from the standard QCS syntax to a translated message having the QCS type 1 syntax to set error correction for a quantum process that is to be initiated on a QCS 12 of QCS type 1.

It is noted that the interfaces 30 - 38 may also be operable to translate messages from the QCS type 1 syntax to the standard QCS syntax. Such reverse translation may be implemented by parallel data structures or applications.

The interfaces 30 - 38 may comprise any suitable mechanism or mechanisms via which the desired translation from a standard QCS syntax to a desired translated syntax can be implemented. In one implementation, the interfaces may comprise data structures that correlate a standard QCS syntax to the desired translated syntax. In some implementations the interfaces may comprise one or more java applications that receive a message having the standard QCS syntax and output the desired translated message. For example, each of the elements 40-1 - 40-5 may comprise a java application developed to accomplish the desired translation. The interfaces 30 - 38 may be installed on the QCS 12-1 by, for example, an operator. Alternatively, as will be discussed below, in some implementations the QCSs 12 may provide the interfaces 30 - 38 to other QCSs 12 during a connection process.

The QCS configurations 28-2 - 28-Y contain similar interfaces that are operable to translate messages written in the standard QCS syntax to messages having syntaxes that are suitable for accomplishing the desired functions on QCSs 12 of QCS types 2 - Y, respectively.

The term "standard QCS syntax" refers to the use of a same syntax by a process executing on the QCS 12-1 to accomplish a desired task with respect to an external QCS 12-2 - 12-N irrespective of the QCS type of the external QCS 12-2 - 12-N. Thus, if a process executing on the QCS 12-1 desires to communicate with a QCS 12 of QCS type 1 or a QCS 12 of QCS type 2, the process sends the same message even though the two QCSs require different messages to accomplish the same task. It is noted that while for purposes of illustration only the interfaces 30 - 38 have been described, the QCS 12-1 may include any number of interfaces sufficient to communicate with another QCS 12. While not illustrated due to spatial limitations, the QCSs 12-2 - 12-N may be similarly configured as the QCS 12-1.

In some implementations as a QCS 12 connects to the network 14 the QCS 12 broadcasts a connection message to announce the availability of the QCS 12. The connection message may include a unique identifier that uniquely identifies the "announcing" QCS 12 and the QCS type of the QCS 12. Other "receiving" QCSs 12 may receive the connection message and access the known QCSs data structure 22 to determine if the announcing QCS 12 is known to the receiving QCS 12. If not, the receiving QCS 12 may generate an entry in the known QCSs data structure 22 that identifies the announcing QCS 12 and the QCS type of the QCS 12.

In some implementations the receiving QCS 12 may determine that the receiving QCS 12 lacks a QCS configuration 28 for that particular QCS type. The receiving QCS 12 may send the announcing QCS 12 a message indicating that the receiving QCS 12 lacks a QCS configuration 28 that corresponds to that particular QCS type. The announcing QCS 12 may send the receiving QCS 12 the appropriate information to allow the receiving QCS 12 to generate a QCS configuration 28 for that QCS type. For example, the announcing QCS 12 may send information that identifies the type of interface, and for each type of interface a data structure that correlates a message in the standard QCS syntax to a translated message that accomplishes the desired function on a QCS 12 of the particular QCS type. Additionally or alternatively, the announcing QCS 12 may send scripts, executable modules, and/or interpretable modules that receives a message in the standard QCS syntax to accomplish a desired function and translates the message to a translated message that accomplishes the desired function on a QCS 12 of the particular QCS type.

With this background an example of facilitating communications between disparate QCS 12 will be discussed. Assume that the QCS 12-2 connects to the network 14 and that the network 14 is a private network to which a relatively large number of QCSs 12 of different QCS types may connect. The QCS 12-2 broadcasts a connection message that includes a unique identifier of the QCS 12-2 and a QCS type, in this example a QCS type 1, of the QCS 12-2. The QCS 12-1 accesses the known QCSs data structure 22 and determines that the QCS 12-2 is unknown to the QCS 12-1. The QCS 12-1 generates the entry 24-2 based on the unique identifier of the QCS 12-1 and the QCS type and stores the entry 24-2 in the known QCSs data structure 22.

The QCS 12-1 accesses the QCS configurations data structure 26 and determines that the QCS configurations data structure 26 lacks a QCS configuration 28 that corresponds to the QCS type 1. The QCS 12-1 sends to the QCS 12-2 a message indicating that the QCS 12-1 lacks a QCS configuration 28 that corresponds to the QCS type 1. In response, the QCS 12-2 sends information operable to facilitate the generation of the QCS configuration 28-1. In this example the information comprises a plurality of Java^{®} beans, each Java bean operable to translate a message written in the standard QCS syntax to a corresponding translated message written in a second QCS syntax that corresponds to the QCS type 1 of the QCS 12-2. The QCS 12-1 generates and stores the QCS configuration 28-1 based on the information.

The QCS 12-1 initiates a process 48. A service 50 receives an indication that the process 48 desires to communicate with the QCS 12-2. The mechanism via which the service 50 receives the indication may differ depending on different implementations. In one implementation, the process 48 may invoke a function, such as an API function, which indicates a desire to communicate to with the QCS 12-2. The service 50 is notified of the desire to communicate with the QCS 12-2 via the API function. In some implementations the service 50 may be a component of the operating system of the QCS 12-1 The service 50 accesses the known QCS data structure 22 and based on the entry 24-2 determines that the QCS 12-2 is known to the QCS 12-1 and is a QCS type 1. The service 50 initiates an external QCS agent 52 from an external QCS agent executable 53 that is operable to communicate with the QCS 12-2 based on the QCS configuration 28-1 of the plurality of QCS configurations 28.

In one implementation the service 50 initiates the external QCS agent 52 with a reference to the QCS configuration 28-1. The external QCS agent 52 initiates a controller 54. The controller 54 loads a plurality of interfaces 56 - 64 based on the interfaces 30 - 38, respectively. The plurality of interfaces 56 - 64 may comprise, for example, data structures that the controller 54 uses to correlate a standard QCS syntax to the desired translated syntax. In other implementations the plurality of interfaces 56 - 64 may comprise invocable functions or applications that receive a message having the standard QCS syntax and output the desired translated message. The external QCS agent 52 may implement an API that implements the standard QCS syntax.

The service 50 may then cause the process 48 to interface with the external QCS agent 52, such as by providing a destination address of the external QCS agent 52 to the process 48. The process 48, in this example, sends a message to the external QCS agent 52 comprising a query requesting a quantity of available qubits on the QCS 12-2. The message may be a plurality of alpha-numeric characters that conform to the standard QCS syntax to cause a QCS 12 to provide the quantity of available qubits on the QCS 12. In other implementations, the message comprises the invocation of a particular API endpoint that corresponds to a request for a QCS 12 to provide the quantity of available qubits on the QCS 12, such as a REST API endpoint, offered by the external QCS agent 52.

The controller 54 receives the message, and invokes a number of available qubits function of the qubit registry interface 60. The number of available qubits function generates a translated message in a second syntax (e.g., a QCS type 1 syntax) operable to cause the QCS 12-2 to respond with the number of available qubits. The controller 54 sends the translated message to the QCS 12-2. The QCS 12-2 receives the message and in response sends a reply message to the controller 54 that indicates there are five available qubits. The controller 54 receives the reply message and translates the reply message from the QCS type 1 syntax to the standard QCS syntax to generate a translated reply message. The controller 54 sends the translated reply message to the process 48. In a REST API implementation, the controller 54 returns the translated reply message via a REST API response.

The process 48 receives the translated reply message identifying the quantity of available qubits on the QCS 12-2. In response to receiving the reply message, the process 48 determines that the QCS 12-2 has sufficient available qubits to execute a particular quantum process. The process 48 sends to the external QCS agent 52 a quantum process initiation message operable to cause the QCS 12-2 to initiate the quantum process. The message conforms to the standard QCS syntax to cause a QCS 12 to initiate a quantum process. Again, the message may be a plurality of alpha-numeric characters that conform to the standard QCS syntax to cause an external QCS 12 to initiate a quantum process, or, in other implementations, the message comprises the invocation of a particular API endpoint operable to cause an external QCS 12 to initiate a quantum process, such as a REST API endpoint, offered by the external QCS agent 52. The message includes a process identifier of the quantum process to initiate.

The controller 54 receives the message, and invokes an initiate process function of the operating system interface 56. The initiate process function generates a translated message in a second syntax (e.g., a QCS type 1 syntax) operable to cause a QCS type 1 QCS to initiate a quantum process. The controller 54 sends the translated message to the QCS 12-2.

The QCS 12-2 receives the message and in response initiates a quantum process 66. The QCS 12-2 sends a reply message to the controller 54 that indicates that the quantum process 66 has been initiated. The controller 54 receives the reply message and translates the reply message from the QCS type 1 syntax to the standard QCS syntax to generate a translated reply message. The controller 54 sends the translated reply message to the process 48. In a REST API implementation, the controller 54 returns the translated reply message via a REST API response.

As another example, assume that the QCS 12-1 and the QCS 12-2 are communicatively coupled via a fiber optic cable 68 via which the QCS 12-1 and the QCS 12-2 can establish a quantum channel via the fiber optic cable 68 to communicate quantum data. The process 48 sends a message to the external QCS agent 52 comprising an instruction to establish a quantum channel communication session with the QCS 12-2 via the fiber optic cable 68. The controller 54 receives the message and invokes an establish quantum channel communication session function of the channel interface 62. The establish quantum channel communication session function generates a translated message in a second syntax (e.g., a QCS type 1 syntax) operable to cause the QCS 12-2 to establish a quantum channel communication session with the QCS 12-1. The controller 54 sends the translated message to the QCS 12-2 to establish the quantum channel communication session between the QCS 12-1 and the QCS 12-2.

It is noted that, because the service 50 is a component of the QCS 12-1, functionality implemented by the service 50 may be attributed to the QCS 12-1 generally. Moreover, in examples where the service 50 comprises software instructions that program the processor device 16 to carry out functionality discussed herein, functionality implemented by the service 50 may be attributed herein to the processor device 16. Similarly, it is noted that, because the controller 54 is a component of the external QCS agent 52, functionality implemented by the controller 54 may be attributed to the external QCS agent 52 generally.

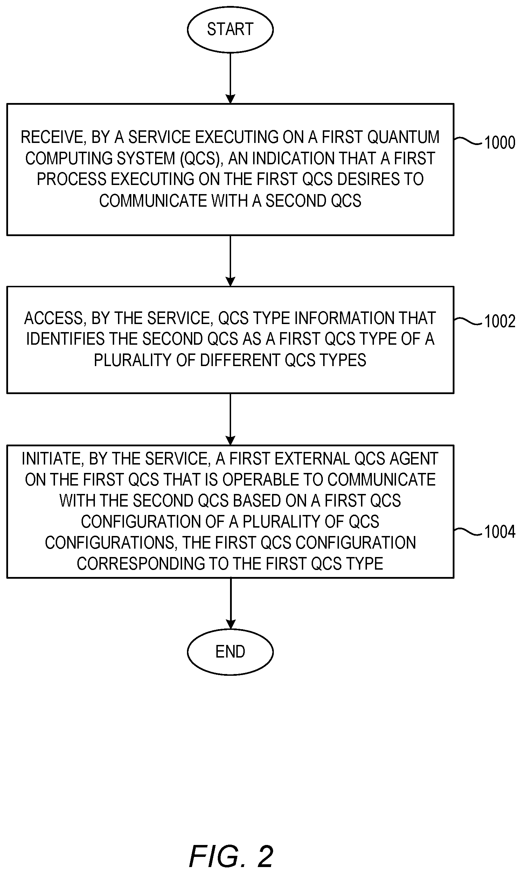

Figure 2 is a flowchart of a method for facilitating communications between disparate quantum computing systems according to some implementations. Figure 2 will be discussed in conjunction with Figure 1. The service 50 executing on the QCS 12-1 receives an indication that the process 48 executing on the QCS 12-1 desires to communicate with the QCS 12-2 (Figure 2, block 1000). The service 50 accesses the QCS type information in the entry 24-2 that identifies the QCS 12-2 as a QCS type 1 of a plurality of different QCS types (Figure 2, block 1002). The service 50 initiates the external QCS agent 52 on the QCS 12-1 that is operable to communicate with the QCS 12-2 based on the QCS configuration 28-1 of the plurality of QCS configurations 28-1 - 28-Y, the QCS configuration 28-1 corresponding to the QCS type 1 (Figure 2, block 1004).

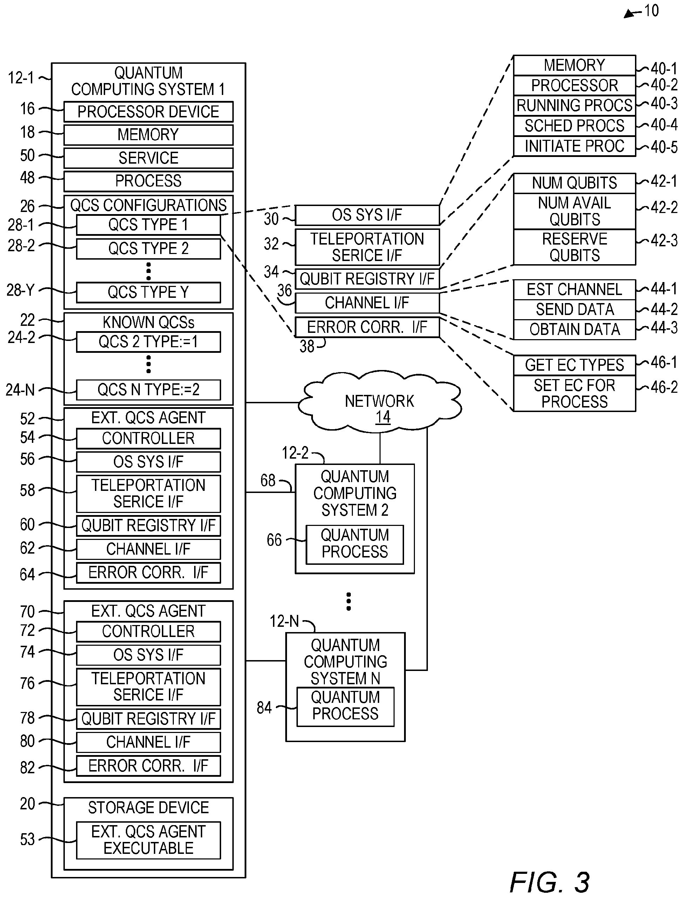

Figure 3 is a block diagram of the environment 10 illustrated in Figure 1 at a subsequent point in time. In this example, subsequent to causing the initiation of the quantum process 66 on the QCS 12-2, the service 50 receives an indication that the process 48 desires to communicate with the QCS 12-N. The service 50 accesses the known QCS data structure 22 and based on the entry 24-N, determines that the QCS 12-N is known to the QCS 12-1 and is a QCS type 2. The service 50 initiates an external QCS agent 70 from the external QCS agent executable 53 on the QCS 12-1 that is operable to communicate with the QCS 12-N based on the QCS configuration 28-2 of the plurality of QCS configurations 28.

The external QCS agent 70 initiates a controller 72. The controller 72 loads a plurality of interfaces 74 - 82 based on interfaces identified in the QCS configuration 28-2 that correspond to the interfaces 30 - 38. The plurality of interfaces 74 - 82 may comprise, for example, data structures that the controller 72 uses to correlate a standard QCS syntax to the desired translated syntax. In other implementations the plurality of interfaces 74 - 82 may comprise invocable functions or applications that receive a message having the standard QCS syntax and output the desired translated message. The external QCS agent 70 may implement an API that implements the standard QCS syntax.

The service 50 may then cause the process 48 to interface with the external QCS agent 70, such as by providing a destination address of the external QCS agent 70 to the process 48. The process 48, in this example, sends a message to the external QCS agent 70 comprising a query requesting a quantity of available qubits on the QCS 12-N. The controller 72 receives the message, and invokes a number of available qubits function of the qubit registry interface 78. The number of available qubits function generates a translated message in a third syntax (e.g., a QCS type 2 syntax) operable to cause the QCS 12-N to respond with the number of available qubits. The controller 72 sends the translated message to the QCS 12-N. The QCS 12-N receives the message and in response sends a reply message to the controller 72 that indicates there are eight available qubits. The controller 72 receives the reply message and translates the reply message from the QCS type 2 syntax to the standard QCS syntax to generate a translated reply message. The controller 72 sends the translated reply message to the process 48. In a REST API implementation, the controller 72 returns the translated reply message via a REST API response.

The process 48 receives the translated reply message identifying the quantity of available qubits on the QCS 12-N. In response to receiving the reply message, the process 48 determines that the QCS 12-N has sufficient available qubits to execute a particular quantum process, which in this example is a copy of the quantum process 66. The process 48 sends to the external QCS agent 70 a quantum process initiation message operable to cause the QCS 12-N to initiate the quantum process. The message conforms to the standard QCS syntax to cause a QCS 12 to initiate a quantum process. Again, the message may be a plurality of alpha-numeric characters that conform to the standard QCS syntax to cause an external QCS 12 to initiate a quantum process, or, in other implementations, the message comprises the invocation of a particular API endpoint operable to cause an external QCS 12 to initiate a quantum process, such as a REST API endpoint, offered by the external QCS agent 70. The message includes a process identifier of the quantum process to initiate.

The controller 72 receives the message, and invokes an initiate process function of the operating system interface 74 The initiate process function generates a translated message in a third syntax (e.g., the QCS type 2 syntax) operable to cause a QCS type 2 QCS 12 to initiate a quantum process. The controller 72 sends the translated message to the QCS 12-N.

The QCS 12-N receives the message and in response initiates a quantum process 84. The QCS 12-N sends a reply message to the controller 72 that indicates that the quantum process 84 has been initiated. The controller 72 receives the reply message and translates the reply message from the QCS type 2 syntax to the standard QCS syntax to generate a translated reply message. The controller 72 sends the translated reply message to the process 48. In a REST API implementation, the controller 72 returns the translated reply message via a REST API response.

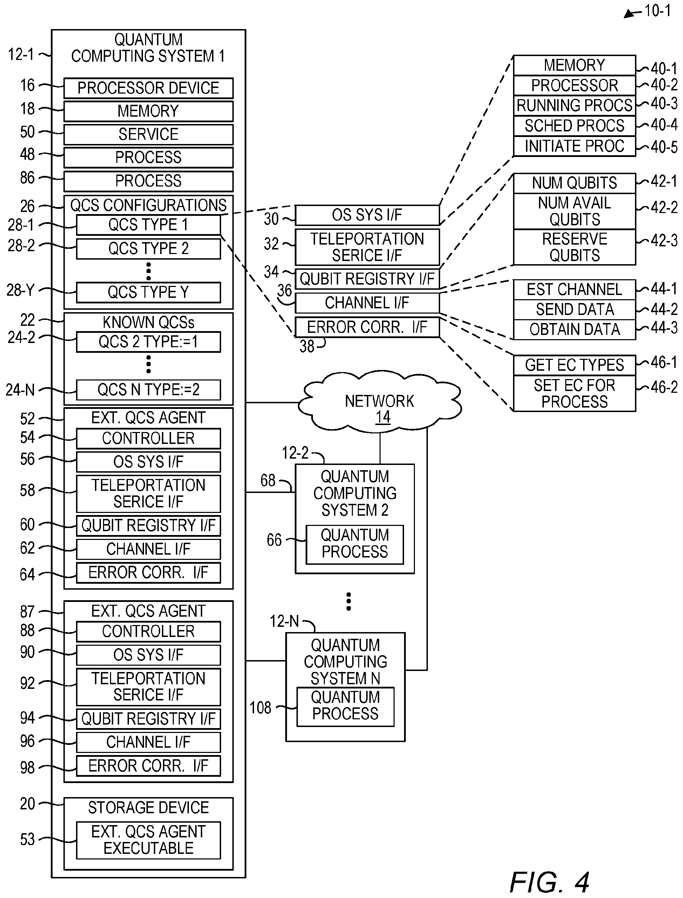

Figure 4 is a block diagram of an environment 10-1. The environment 10-1 is substantially similar to the environment 10 except as otherwise discussed herein. In this example, subsequent to causing the initiation of the quantum process 66 on the QCS 12-2, the service 50 receives an indication that a process 86 desires to communicate with the QCS 12-N. The service 50 accesses the known QCS data structure 22 and based on the entry 24-N, determines that the QCS 12-N is known to the QCS 12-1 and is a QCS type 2. The service 50 initiates an external QCS agent 87 from the external QCS agent executable 53 on the QCS 12-1 that is operable to communicate with the QCS 12-N based on the QCS configuration 28-2 of the plurality of QCS configurations 28.

The external QCS agent 87 initiates a controller 88. The controller 88 loads a plurality of interfaces 90 - 98 based on interfaces identified in the QCS configuration 28-2 that correspond to the interfaces 30 - 38. The plurality of interfaces 90 - 98 may comprise, for example, data structures that the controller 88 uses to correlate a standard QCS syntax to the desired translated syntax. In other implementations the plurality of interfaces 90 - 98 may comprise invocable functions or applications that receive a message having the standard QCS syntax and output the desired translated message. The external QCS agent 87 may implement an API that implements the standard QCS syntax.

The service 50 may then cause the process 86 to interface with the external QCS agent 87, such as by providing a destination address of the external QCS agent 87 to the process 86. The process 86, in this example, sends a message to the external QCS agent 87 comprising a query requesting a quantity of available qubits on the QCS 12-N. The controller 88 receives the message, and invokes a number of available qubits function of the qubit registry interface 94. The number of available qubits function generates a translated message in a third syntax (e.g., a QCS type 2 syntax) operable to cause the QCS 12-N to respond with the number of available qubits. The controller 88 sends the translated message to the QCS 12-N. The QCS 12-N receives the message and in response sends a reply message to the controller 88 that indicates there are ten available qubits. The controller 88 receives the reply message and translates the reply message from the QCS type 2 syntax to the standard QCS syntax to generate a translated reply message. The controller 88 sends the translated reply message to the process 86. In a REST API implementation, the controller 88 returns the translated reply message via a REST API response.

The process 86 receives the translated reply message identifying the quantity of available qubits on the QCS 12-N. In response to receiving the reply message, the process 86 determines that the QCS 12-N has sufficient available qubits to execute a particular quantum process. The process 86 sends to the external QCS agent 87 a quantum process initiation message operable to cause the QCS 12-N to initiate the quantum process. The message conforms to the standard QCS syntax to cause a QCS 12 to initiate a quantum process. Again, the message may be a plurality of alpha-numeric characters that conform to the standard QCS syntax to cause an external QCS 12 to initiate a quantum process, or, in other implementations, the message comprises the invocation of a particular API endpoint operable to cause an external QCS 12 to initiate a quantum process, such as a REST API endpoint, offered by the external QCS agent 87. The message includes a process identifier of the quantum process to initiate.

The controller 88 receives the message, and invokes an initiate process function of the operating system interface 90. The initiate process function generates a translated message in a third syntax (e.g., the QCS type 2 syntax) operable to cause a QCS type 2 QCS 12 to initiate a quantum process. The controller 88 sends the translated message to the QCS 12-N.

The QCS 12-N receives the message and in response initiates a quantum process 108. The QCS 12-N sends a reply message to the controller 88 that indicates that the quantum process 108 has been initiated. The controller 88 receives the reply message and translates the reply message from the QCS type 2 syntax to the standard QCS syntax to generate a translated reply message. The controller 88 sends the translated reply message to the process 86. In a REST API implementation, the controller 88 returns the translated reply message via a REST API response.

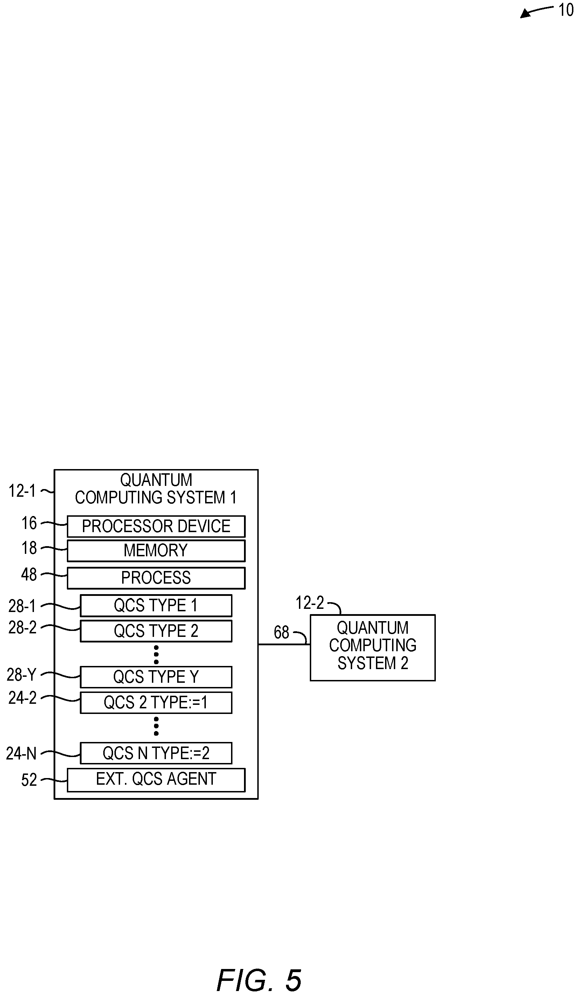

Figure 5 is a simplified block diagram of the environment 10 illustrated in Figure 1 according to some implementations. The environment 10 includes the QCS 12-1 (e.g., the first QCS), which in turn includes the memory 18 and the processor device 16 coupled to the memory 18. The processor device 16 is to receive an indication that the process 48 (e.g., a first process) executing on the QCS 12-1 desires to communicate with the QCS 12-2 ( e.g., a second QCS). The processor device 16 is to access the QCS type information (e.g., in the known QCS data structure 22) that identifies the QCS 12-2 as a first QCS type (e.g., QCS type 1) of the plurality of different QCS types (e.g., QCS types 1 - Y). The processor device 16 is to initiate the external QCS agent 52 (e.g., a first external QCS agent) on the QCS 12-1 that is operable to communicate with the QCS 12-2 based on the QCS configuration 28-1 (e.g., the first QCS configuration) of the plurality of QCS configurations 28-1 - 28-Y), the QCS 28-1 configuration corresponding to the QCS type 1.

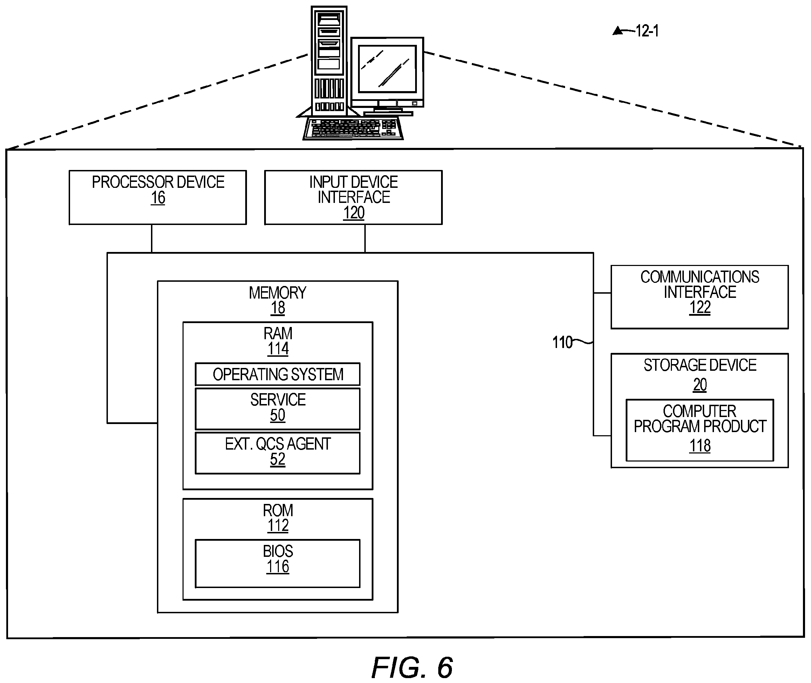

Figure 6 is a block diagram of the QCS 12-1 suitable for implementing examples according to one example. The QCS 12-1 may comprise any quantum computing system capable of including firmware, hardware, and/or executing software instructions to implement the functionality described herein. The QCS 12-1 includes the processor device 16, the system memory 18, and a system bus 110. The system bus 110 provides an interface for system components including, but not limited to, the system memory 18 and the processor device 16. The processor device 16 can be any commercially available or proprietary processor.

The system bus 110 may be any of several types of bus structures that may further interconnect to a memory bus (with or without a memory controller), a peripheral bus, and/or a local bus using any of a variety of commercially available bus architectures. The system memory 18 may include non-volatile memory 112 (e.g., read-only memory (ROM), erasable programmable read-only memory (EPROM), electrically erasable programmable read-only memory (EEPROM), etc.), and volatile memory 114 (e.g., random-access memory (RAM)). A basic input/output system (BIOS) 116 may be stored in the non-volatile memory 112 and can include the basic routines that help to transfer information between elements within the QCS 12-1. The volatile memory 114 may also include a high-speed RAM, such as static RAM, for caching data.

The QCS 12-1 may further include or be coupled to a non-transitory computer-readable storage medium such as the storage device 20, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 20 and other drives associated with computer-readable media and computer-usable media may provide non-volatile storage of data, data structures, computer-executable instructions, and the like.

A number of modules can be stored in the storage device 20 and in the volatile memory 114, including an operating system and one or more program modules, such as the service 50 and the external QCS agent 52, which may implement the functionality described herein in whole or in part. All or a portion of the examples may be implemented as a computer program product 118 stored on a transitory or non-transitory computer-usable or computer-readable storage medium, such as the storage device 20, which includes complex programming instructions, such as complex computer-readable program code, to cause the processor device 16 to carry out the steps described herein. Thus, the computer-readable program code can comprise software instructions for implementing the functionality of the examples described herein when executed on the processor device 16. The processor device 16, in conjunction with the service 50 in the volatile memory 114, may serve as a controller, or control system, for the QCS 12-1 that is to implement the functionality described herein. An operator, such as the user 24, may also be able to enter one or more configuration commands through a keyboard (not illustrated), a pointing device such as a mouse (not illustrated), or a touch-sensitive surface such as a display device. Such input devices may be connected to the processor device 16 through an input device interface 120 that is coupled to the system bus 110 but can be connected by other interfaces such as a parallel port, an Institute of Electrical and Electronic Engineers (IEEE) 1394 serial port, a Universal Serial Bus (USB) port, an IR interface, and the like. The QCS 12-1 may also include a communications interface 122, such as an Ethernet transceiver and/or a Wi-Fi transceiver, or the like, suitable for communicating with the network 14 as appropriate or desired.

Individuals will recognize improvements and modifications to the preferred examples of the disclosure. All such improvements and modifications are considered within the scope of the concepts disclosed herein and the claims that follow.

## Claims

1. A method, comprising:
receiving, by a service executing on a first quantum computing system (QCS), an indication that a first process executing on the first QCS desires to communicate with a second QCS;
accessing, by the service, QCS type information that identifies the second QCS as a first QCS type of a plurality of different QCS types; and
initiating, by the service, a first external QCS agent on the first QCS that is operable to communicate with the second QCS based on a first QCS configuration of a plurality of QCS configurations, the first QCS configuration corresponding to the first QCS type.

2. The method of claim 1, further comprising:
receiving, by the first external QCS agent, a first message originating from the first process;
translating, by the first external QCS agent based on the first QCS configuration, the first message from a standard QCS syntax to a second QCS syntax that is different from the standard QCS syntax to generate a first translated message; and
sending, by the first external QCS agent, the first translated message to the second QCS.

3. The method of claim 2, further comprising:
receiving, by the first external QCS agent from the second QCS, a reply message made in response to the first translated message;
translating, by the first external QCS agent, the reply message from the second QCS syntax to generate a translated reply message in the standard QCS syntax; and
sending, by the first external QCS agent to the first process, the translated reply message, optionally
wherein the first message comprises a quantum process initiation message that instructs the second QCS to initiate a quantum process and wherein the reply message indicates that the quantum process has successfully been initiated.

4. The method of claim 1, further comprising:
receiving, by the service, an indication that the first process desires to communicate with a third QCS;
accessing, by the service, QCS type information that identifies the third QCS as a second QCS type of the plurality of different QCS types; and
initiating, by the service, a second external QCS agent on the first QCS that is operable to communicate with the third QCS based on a second QCS configuration of the plurality of QCS configurations, the second QCS configuration corresponding to the second QCS type.

5. The method of claim 4, further comprising:
receiving, by the first external QCS agent, a first message originating from the first process;
translating, by the first external QCS agent based on the first QCS configuration, the first message from a standard QCS syntax to a second QCS syntax that is different from the standard QCS syntax to generate a first translated message;
sending, by the first external QCS agent, the first translated message to the second QCS;
receiving, by the second external QCS agent, a second message originating from the first process;
translating, by the second external QCS agent based on the second QCS configuration, the second message from the standard QCS syntax to a third QCS syntax that is different from the standard QCS syntax to generate a second translated message, the second QCS configuration identifying the third QCS syntax; and
sending, by the second external QCS agent, the second translated message to the third QCS.

6. The method of claim 1, further comprising:
sending, by the first process to the first external QCS agent, a message comprising a query requesting a quantity of available qubits on the second QCS; and
receiving, by the first process from the first external QCS agent, a first translated reply message identifying the quantity of available qubits on the second QCS.

7. The method of claim 6, further comprising:
in response to receiving the first translated reply message, sending, by the first process to the first external QCS agent, a quantum process initiation message that instructs the second QCS to initiate a quantum process; and
receiving, by the first process from the first external QCS agent, a second translated reply message that indicates that the quantum process has successfully been initiated on the second QCS.

8. The method of claim 7, further comprising:
receiving, by the first external QCS agent, the quantum process initiation message;
translating, by the first external QCS agent based on the first QCS configuration, the quantum process initiation message from a standard QCS syntax to a second QCS syntax that is different from the standard QCS syntax to generate a translated quantum process initiation message;
sending, by the first external QCS agent, the translated quantum process initiation message to the second QCS;
receiving, by the first external QCS agent from the second QCS, a reply message made in response to the translated quantum process initiation message, the reply message indicating that the quantum process has successfully been initiated;
translating, by the first external QCS agent, the reply message from the second QCS syntax to generate the second translated reply message in the standard QCS syntax; and
sending, by the first external QCS agent to the first process, the second translated reply message.

9. The method of claim 1, further comprising:
receiving, by the service, an indication that a second process executing on the first QCS desires to communicate with a third QCS;
accessing, by the service, QCS type information that identifies the third QCS as a second QCS type of the plurality of different QCS types; and
initiating, by the service, a second external QCS agent on the first QCS that is operable to communicate with the third QCS based on a second QCS configuration of the plurality of QCS configurations, the second QCS configuration corresponding to the second QCS type.

10. The method of claim 9, further comprising:
receiving, by the second external QCS agent, a first message originating from the second process;
translating, by the second external QCS agent based on the second QCS configuration, the first message from a standard QCS syntax to a second QCS syntax that is different from the standard QCS syntax to generate a first translated message; and
sending, by the second external QCS agent, the first translated message to the third QCS.

11. The method of claim 1, wherein the first QCS is communicatively coupled to the second QCS via a fiber optic cable, and further comprising:
receiving, by the first external QCS agent, a first message originating from the first process comprising an instruction to establish a communication session with the second QCS via the fiber optic cable;
translating, by the first external QCS agent based on the first QCS configuration, the first message from a standard QCS syntax to a second QCS syntax that is different from the standard QCS syntax to generate a first translated message; and
sending, by the first external QCS agent via the fiber optic cable, the first translated message to the second QCS.

12. The method of claim 1, further comprising:
receiving, by the first QCS from the second QCS, a connection message, the connection message comprising a unique identifier of the second QCS and a QCS type of the second QCS; and
responsive to determining, by the first QCS, that the second QCS was previously unknown to the first QCS, storing, in a data structure, an entry comprising the unique identifier and the QCS type of the second QCS.

13. The method of claim 12, further comprising:
determining, by the first QCS, that the first QCS lacks a QCS configuration entry that corresponds to the QCS type of the second QCS; and
sending, by the first QCS to the second QCS, a message indicating that the first QCS lacks a QCS configuration entry that corresponds to the QCS type of the second QCS, and optionally
receiving, by the first QCS from the second QCS, information operable to facilitate a translation of messages written in a standard QCS syntax to corresponding translated messages written in a second QCS syntax that corresponds to the QCS type of the second QCS.

14. A quantum computing system, comprising:
a memory; and
a processor device coupled to the memory, the processor device configured to perform the method of any of claims 1-13.

15. A non-transitory computer-readable storage medium that includes executable instructions configured to cause a processor device of a quantum computing system to perform the method of any of claims 1-13.
